# EUROPÄISCHE PATENTSCHRIFT

(11) **EP 4 386 805 B1**
(45) Veröffentlichungstag und Bekanntmachung des Hinweises auf die Patenterteilung: **15.10.2025**
(21) Anmeldenummer: 23208792.4
(22) Anmeldetag: 09.11.2023
(51) Int. Cl.: H01H 85/00

(54) **SICHERUNGSVORRICHTUNG, AKKUPACK MIT EINER SICHERUNGSVORRICHTUNG UND VERFAHREN ZUR HERSTELLUNG EINER SICHERUNGSVORRICHTUNG**
SAFETY DEVICE, BATTERY PACK HAVING A SAFETY DEVICE, AND METHOD FOR PRODUCING A SAFETY DEVICE
DISPOSITIF DE SÉCURITÉ, BLOC-BATTERIE COMPRENANT UN DISPOSITIF DE SÉCURITÉ ET PROCÉDÉ DE FABRICATION D'UN DISPOSITIF DE SÉCURITÉ

(30) Priorität: 15.12.2022 DE 102022213705
(43) Veröffentlichungstag der Anmeldung: 19.06.2024
(73) Patentinhaber: Robert Bosch GmbH, 70442 Stuttgart (DE)
(72) Erfinder: Wernerus, Holger, 72124 Pliezhausen (DE); Zwahr, Anton, 72764 Reutlingen (DE)

(56) Entgegenhaltungen:
- EP-A1- 3 579 300
- US-A1- 2007 188 148
- US-A1- 2013 323 548
- US-B2- 10 181 715

## Beschreibung

### Stand der Technik

Es ist bereits eine Sicherungsvorrichtung für zumindest eine Akkuzelle, mit einem Sicherungselement zur Unterbrechung eines Stromflusses von der Akkuzelle in einem kritischen Zustand der Akkuzelle, mit einer Heizeinheit, welche mit dem Sicherungselement, insbesondere elektrisch und/oder thermisch und/oder mechanisch, gekoppelt ist und zur Unterstützung eines Auslösens des Sicherungselements vorgesehen ist, und mit einer Steuereinheit zum Aktvieren der Heizeinheit in dem kritischen Zustand, vorgeschlagen worden. Das Dokument US 2007/188148 offenbart eine Einheit gemäß dem Oberbegriff des Anspruchs 1.

### Offenbarung der Erfindung

Die Erfindung geht aus von einer Sicherungsvorrichtung gemäß Anspruch 1.

Es wird vorgeschlagen, dass die Sicherungsvorrichtung zumindest ein Trägerelement zur Aufnahme des Sicherungselements und zumindest eines Heizelements der Heizeinheit aufweist.

Durch die erfindungsgemäße Ausgestaltung der Sicherungsvorrichtung kann vorteilhaft eine Sicherheit erhöht werden. Es kann vorteilhaft ein Auslösen des Schutzelements in dem kritischen Zustand der Akkuzelle begünstigt oder in bestimmten kritischen Zuständen sogar überhaupt erst ermöglicht werden. Ferner kann vorteilhaft die bei bekannten Sicherungsvorrichtungen aus dem Stand der Technik bestehende Problematik von unabgesicherten Bereichen, welche bisher beispielsweise bei bestimmten Ladezuständen in Kombination mit bestimmten Kurzschlusswiderständen, die sich durch verschiedene Auslösecharakteristika verschiedener Sicherungselemente, beispielsweise zwischen einer Auslösecharakteristik einer Schmelzsicherung und der Auslösecharakteristik eines CID ("Current Interruption Device") bei herkömmlichen Lithium-lonen-Akkupacks, ergeben können, gelöst werden. Des Weiteren kann vorteilhaft eine Effizienz verbessert werden. Es kann insbesondere ein Einsatz von teuren nicht-StandardBauteilen vermieden und so eine Kosteneffizienz verbessert werden. Zudem kann vorteilhaft eine Auslegung bestehender Schutzelemente vereinfacht und damit eine Effizienz bei der Entwicklung und/oder Herstellung verbessert werden.

Die Sicherungsvorrichtung weist das Sicherungselement zur Unterbrechung eines Stromflusses in einem kritischen Zustand der Akkuzelle auf und kann darüber hinaus weitere Sicherungselemente aufweisen. Die Akkuzelle kann Teil eines Akkupacks sein und insbesondere in Kombination mit weiteren Akkuzellen des Akkupacks betrieben werden, welche mit der Akkuzelle elektrisch parallel und/oder elektrisch in Reihe verschaltet sein können. Die Sicherungsvorrichtung ist dann vorteilhaft ebenfalls Teil des Akkupacks. Denkbar ist, dass die Sicherungsvorrichtung für mehrere Akkuzellen des Akkupacks vorgesehen ist. Der Ackupack kann auch mehrere Sicherungsvorrichtungen, insbesondere je eine Sicherungsvorrichtung für jede Akkuzelle, aufweisen. Alternativ kann die Akkuzelle auch einzeln betrieben werden und zur Sicherung mit der Sicherungsvorrichtung verbunden sein. Die Sicherungsvorrichtung ist dabei nicht auf die Verwendung eines bestimmten Typs von Akkuzelle und/oder Akkupack beschränkt. Die Sicherungsvorrichtung kann, ohne darauf beschränkt zu sein, beispielsweise zu einem Einsatz mit Akkuzellen von Lithium-Ionen-Akkumulatoren und/oder von Lithium-Polymer-Akkumulatoren und/oder von Nickel-Cadmium-Akkumulatoren und/oder von anderen bekannten und dem Fachmann als sinnvoll erscheinenden Akkumulatortypen vorgesehen sein. Auch ist die Sicherungsvorrichtung nicht auf eine bestimmte Geometrie und/oder ein bestimmtes Format von Akkuzellen und/oder Akkupacks beschränkt. Die Akkuzelle kann beispielsweise verschiedene Zellgeometrien und/oder Zellformate aufweisen und beispielsweise als Rundzelle oder Flachzelle oder Pouchzelle oder dergleichen ausgebildet sein.

Das Sicherungselement kann, ohne darauf beschränkt zu sein, beispielsweise als eine Schmelzsicherung und/oder als eine Blechstreifensicherung und/oder als ein temperaturveränderlicher Widerstand, zum Beispiel als ein PTC (engl. positive temperature coefficient thermistor), und/oder als eine, insbesondere verengte, Kupferbahn auf einer Leiterplatte, ausgebildet sein. Ebenso ist auch denkbar, dass das Sicherungselement als eine Lötbrücke oder als eine Metall-Legierung, z.B. als eine Zinn-Legierung, ausgebildet ist, die durch einen definierten Querschnitt und eine definierte Länge einen definierten Widerstand und damit eine definierte Schmelzcharakteristik besitzt. Zudem kann das Sicherungselement als ein Bi-Metall Bauteil ausgebildet sein, welches eine definierte Biegecharakteristik bei Temperaturänderungen besitzt und sich bei thermischer Einwirkung derart biegt, dass ein Stromfluss von der Akkuzelle unterbrochen wird.

Bei einem kritischen Zustand der Akkuzelle kann es sich, ohne darauf beschränkt zu sein, beispielsweise um eine gegenüber einem Normalzustand erhöhte Stromstärke und/oder Spannung, insbesondere einen Kurzschluss der Akkuzelle, und/oder um eine Überhitzung der Akkuzelle und/oder eines Umgebungsbereichs der Akkuzelle und/oder um einen Überdruck in der Akkuzelle und/oder dergleichen handeln.

Die Heizeinheit ist zur Unterstützung eines Auslösens des Sicherungselements vorgesehen und weist hierzu zumindest ein Heizelement auf. Die Heizeinheit kann mehrere Heizelemente aufweisen. Die Heizeinheit ist dazu vorgesehen, das Sicherungselement in einem kritischen Zustand der Akkuzelle zusätzlich thermisch und/oder elektrisch zu beaufschlagen und somit ein Auslösen des Sicherungselements und damit eine Unterbrechung des Stromflusses von der Ackuzelle zu begünstigen. Das Heizelement der Heizeinheit kann zur thermischen und/oder elektrischen Beaufschlagung des Sicherungselements in dem kritischen Zustand der Akkuzelle beispielsweise eine entsprechende Struktur aufweisen und ein oder mehrere Materialien mit entsprechenden elektrischen und/oder thermischen Eigenschaften, beispielsweise aus Kupfer und/oder Aluminium und/oder Silber und/oder dergleichen, aufweisen und/oder aus solchen Materialien ausgebildet sein. Beispielsweise kann das Heizelement als Draht oder als eine spiralförmige und/oder mäanderförmige Kupferstruktur ausgebildet sein. Wenn das Trägerelement als eine Leiterplatte ausgebildet ist, kann das Heizelement auch als eine Kupferbahn mit beliebiger Form, beispielsweise geradlinige oder zickzackförmige Kupferbahn oder dergleichen, ausgebildet sein. Das Heizelement kann alternativ oder zusätzlich auch als ein beheizbares Bauteil, beispielsweise als ein, insbesondere temperaturveränderlicher, Widerstand und/oder als ein Halbleiterbauteil und/oder dergleichen ausgebildet sein. Vorzugsweise ist eine Heizleistung der Heizeinheit durch eine Widerstandsauslegung im Zusammenhang mit einer verfügbaren Spannung der Akkuzelle und/oder des die Akkuzelle aufweisenden Akkupacks bestimmt.

Das Heizelement der Heizeinheit ist mit dem Sicherungselement, insbesondere elektrisch und/oder thermisch und/oder mechanisch, gekoppelt. Beispielsweise kann das Heizelement durch direkten Kontakt, beispielsweise über eine Lötverbindung und/oder Steckverbindung und/oder Schweißverbindung und/oder über einen direkten mechanischen Kontakt mit dem Sicherungselement gekoppelt sein. Alternativ oder zusätzlich kann das Heizelement mit dem Sicherungselement über ein oder mehrere Bauteile mit guter Wärmeleitfähigkeit und/oder mittels Wärmeleitpaste und/oder dergleichen thermisch mit dem Sicherungselement gekoppelt sein.

Zur Energieversorgung ist das Heizelement vorzugsweise, zumindest in dem kritischen Zustand der Akkuzelle, elektrisch leitend mit zumindest einem elektrischen Anschluss der Akkuzelle verbunden. Das Heizelement kann über gängige Verbindungsarten mit dem zumindest einen elektrischen Anschluss der Akkuzelle verbunden sein, beispielsweise über eine Lötverbindung und/oder eine Schweißverbindung und/oder über einen Einpress-Pin und/oder einen Schraubkontakt und/oder über entsprechende Kupferbahnen und/oder dergleichen. Alternativ wäre jedoch auch denkbar, dass die Sicherungsvorrichtung über eine separate Energieversorgung, beispielsweise einen separaten Akku und/oder eine separate Batterie, zur Versorgung der Heizeinheit verfügt und das Heizelement über entsprechende Verbindungsarten mit der Energieversorgung verbunden ist.

Die Steuereinheit ist zum Aktivieren der Heizeinheit vorgesehen und weist hierzu vorzugsweise zumindest ein Schaltelement auf, welches dazu vorgesehen ist, in einem kritischen Zustand der Akkuzelle zum Aktivieren der Heizeinheit eine elektrisch leitende Verbindung zwischen dem Heizelement der Heizeinheit und einem elektrischen Anschluss der Akkuzelle herzustellen. Das Schaltelement kann beispielsweise als ein Relais ausgebildet sein. Vorzugsweise ist das Schaltelement als ein Halbleiterschaltelement, beispielsweise als ein Transistor oder dergleichen ausgebildet. Die Steuereinheit kann dazu vorgesehen sein, das Schaltelement mittels einer Modulationstechnik, beispielsweise mittels Pulsweitenmodulation, anzusteuern, um eine Heizleistung der Heizeinheit zu steuern und/oder zu regeln. Denkbar ist, dass die Steuereinheit eine Messeinheit zur Messung zumindest eines Parameters der Heizeinheit, beispielsweise eines elektrischen Stroms und/oder einer elektrischen Spannung und/oder einer Temperatur der Heizeinheit, aufweist, wobei die Steuereinheit dazu vorgesehen sein kann, eine Regelung der Heizeinheit anhand des mittels der Messeinheit erfasst Parameters vorzunehmen. Vorzugsweise ist die Steuereinheit dazu vorgesehen, die Heizeinheit für einen begrenzten Zeitraum, beispielsweise für 30 s, anzusteuern, insbesondere um einen Energieeintrag der Heizeinheit auf das Sicherungselement und/oder andere Bauteile der Sicherungsvorrichtung und/oder des Akkupacks zu begrenzen.

Das Trägerelement der Sicherungsvorrichtung ist zur Aufnahme des Sicherungselements und des zumindest einen Heizelements der Heizeinheit vorgesehen und weist hierzu eine entsprechende Struktur auf. Denkbar ist auch, dass das Sicherungselement und/oder das Heizelement einstückig mit dem Trägerelement ausgebildet ist/sind. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und vorteilhaft aus einem einzelnen Rohling.

In dem vorliegenden Dokument dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts".

Unter "vorgesehen" soll speziell eingerichtet, speziell ausgelegt und/oder speziell ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass das Trägerelement als eine Leiterplatte ausgebildet ist. Hierdurch kann vorteilhaft eine Anpassung der Sicherungsvorrichtung an verschiedene Anforderungen mit besonders einfachen technischen Mitteln ermöglicht werden. Die Leiterplatte kann als eine starre Leiterplatte (rigid PCB) oder als eine flexible Leiterplatte (flex PCB) ausgebildet sein. Vorzugsweise ist das Sicherungselement als eine Kupferstruktur, insbesondere als eine verengte Kupferbahn, auf der Leiterplatte aufgebracht. Das Heizelement kann ebenfalls als eine Kupferstruktur beliebiger Form, beispielsweise als geradlinige oder zickzackförmige, vorteilhaft als spiralförmige und/oder mäanderförmige Kupferstruktur, auf der Leiterplatte aufgebracht sein. Denkbar ist auch, dass das Heizelement als ein elektrisches und/oder elektronisches Bauteil, beispielsweise als ein, insbesondere temperaturveränderlicher, Widerstand und/oder als ein Halbleiterbauteil und/oder dergleichen ausgebildet ist und die Leiterplatte mit einem derartigen Bauteil bestückt ist. Das Sicherungselement und das Heizelement können auf verschiedenen Seiten der Leiterplatte oder auf derselben Seite der Leiterplatte angeordnet sein. Die Leiterplatte kann einlagig oder mehrlagig sein.

In einer alternativen vorteilhaften Ausgestaltung wird vorgeschlagen, dass das Sicherungselement einstückig mit dem Trägerelement ausgebildet ist. Hierdurch kann vorteilhaft eine besonders einfache und effiziente Herstellung der Sicherungsvorrichtung ermöglicht werden. Beispielsweise kann das Sicherungselement als eine Blechstreifensicherung ausgebildet sein und das Heizelement kann auf und/oder um das Sicherungselement herum, zum Beispiel als ein isolierter Draht, angeordnet sein. Denkbar ist auch, dass das Heizelement aus abgezweigten Teilen des als Blechstreifensicherung ausgebildeten Sicherungselements ausgebildet und auf und/oder um das Sicherungselement herum angeordnet ist, wobei das Heizelement, beispielsweise durch eine Isolationsschicht oder Isolationshülle von geheizten Bereichen des Schutzelements elektrisch isoliert ist.

Zudem wird vorgeschlagen, dass die Sicherungsvorrichtung eine Sensoreinheit zur Erfassung zumindest eines Statusparameters der Akkuzelle aufweist und die Steuereinheit einen Mikroprozessor zur Charakterisierung des Zustands der Ackuzelle basierend auf dem durch die Sensoreinheit erfassten Statusparameter aufweist. Durch eine derartige Ausgestaltung kann vorteilhaft eine Sicherheit weiter erhöht werden. Es kann insbesondere ein Status der Akkuzelle gezielt überwacht, ein Vorliegen eines kritischen Zustands zuverlässig erfasst und in diesem Fall ein besonders präzises Auslösen des Sicherungselements ermöglicht werden. Statusparameter der Akkuzelle können, ohne darauf beschränkt zu sein, beispielsweise eine Temperatur und/oder einen Druck und/oder eine elektrische Spannung und/oder eine elektrische Stromstärke und/oder dergleichen umfassen. Die Sensoreinheit umfasst zur Erfassung des zumindest eines Statusparameters vorzugsweise einen oder mehrere Sensoren, welche, je nach Art des Statusparameters, entsprechend ausgebildet und an entsprechenden Stellen an und/oder in der Akkuzelle angeordnet und/oder elektrisch mit der Akkuzelle verbunden sind. Alternativ oder zusätzlich wäre auch denkbar, dass zumindest ein Schaltelement der Steuereinheit, welches als ein Halbleiterbauteil, zum Beispiel als Transistor, ausgebildet ist, als ein Sensor fungiert und dazu vorgesehen ist, bei Überschreitung seiner Schwellenspannung, welche auf einen kritischen Zustand der Akkuzelle ausgelegt ist, die Heizeinheit, insbesondere ohne eine Charakterisierung des Zustands der Akkuzelle durch den Mikroprozessor, automatisch zu aktivieren.

Des Weiteren wird vorgeschlagen, dass die Sicherungsvorrichtung zumindest einen Isolator aufweist, um das Sicherungselement und das Heizelement elektrisch voneinander zu isolieren. Hierdurch kann vorteilhaft eine Sicherheit weiter erhöht werden. Es kann insbesondere ein Kurzschluss zwischen Sicherungselement und Heizelement verhindert werden. Je nach Ausgestaltung des Sicherungselements und/oder des Heizelements kann der Isolator verschiedenartig ausgebildet sein. Beispielsweise kann der Isolator als ein Teil einer Ummantelung ausgebildet sein, wenn das Heizelement als ein Draht ausgebildet ist. In einer vorteilhaften Ausgestaltung wird vorgeschlagen, dass das Trägerelement als der Isolator fungiert. Durch eine derartige Ausgestaltung kann vorteilhaft eine Effizienz, insbesondere im Hinblick auf einen Material- und/oder Herstellungsaufwand und damit verbunden Kosten, weiter verbessert werden.

Ferner wird vorgeschlagen, dass die Sicherungsvorrichtung zumindest ein Reaktionselement aufweist, welches zumindest in einem Teilbereich auf das Sicherungselement aufgebracht und dazu vorgesehen ist, unter thermischem Einfluss der Heizeinheit mit dem Sicherungselement zu reagieren und dessen physikalische und/oder chemische Eigenschaften zu verändern, um ein Auslösen zu begünstigen. Durch eine derartige Ausgestaltung kann vorteilhaft eine Flexibilität erhöht werden. Insbesondere können Auslösecharakteristika des Sicherungselements auch bei ansonsten gleichbleibendem Aufbau des Schutzelements bedarfsgerecht variiert werden. Das Reaktionselement kann im Falle eines kritischen Zustands der Akkuzelle beispielsweise dazu vorgesehen sein, unter thermischem Einfluss der Heizeinheit die physikalischen und/oder chemischen Eigenschaften des Sicherungselements in Form einer Verringerung des Schmelzpunkts des Kontaktierungselements, beispielsweise durch Legierungsbildung mit dem Schutzelement, zu verändern, um ein Auslösen zu begünstigen. Das Reaktionselement kann beispielsweise aus Zinn ausgebildet sein und unter thermischem Einfluss der Heizeinheit mit dem Schutzelement, welches Kupfer aufweist und/oder aus Kupfer besteht, zu einer Zinnbronze mit einem gegenüber reinem Kupfer niedrigeren Schmelzpunkt reagieren. Denkbar ist auch, dass das Reaktionselement im Falle eines kritischen Zustands der Akkuzelle dazu vorgesehen ist, die physikalischen und/oder chemischen Eigenschaften des Schutzelements in Form einer Erhöhung der Sprödigkeit des Schutzelements zu verändern, um einen Bruch des Sicherungselements und damit dessen Auslösen zu begünstigen. Das Reaktionselement kann beispielsweise aus Gallium ausgebildet sein, sich unter thermischem Einfluss der Heizeinheit teilweise verflüssigen und teilweise in das Schutzelement, welches Aluminium aufweist und/oder aus Aluminium besteht, eindiffundieren und so einen Sprödbruch des Schutzelements und damit dessen Auslösen begünstigen. Das Reaktionselement kann in einem Teilbereich oder in mehreren Teilbereichen, beispielsweise in Form von einen oder mehreren Lötpunkten oder dergleichen, oder vollflächig, beispielsweise durch Beschichtung, auf das Schutzelement aufgebracht sein.

Zudem wird vorgeschlagen, dass das Heizelement und das Sicherungselement als Kupferlagen ausgebildet und in zueinander benachbarten Lagen auf dem Trägerelement angeordnet sind, wobei die Kupferlagen unterschiedliche Dicken aufweisen können. Hierdurch kann vorteilhaft eine besonders flexible Ausgestaltung der Sicherungsvorrichtung und insbesondere eine einfache Anpassung an verschiedene Anforderungen ermöglicht werden. Denkbar ist auch, dass einige oder sämtliche Kupferlagen die gleiche Dicke aufweisen. Vorzugsweise ist das Trägerelement in dieser Ausgestaltung als eine mehrlagige Leiterplatte ausgebildet und weist zumindest zwei Lagen auf. Im Falle von mehr als zwei Lagen ist das Sicherungselement vorzugsweise in einer äußeren Lage angeordnet, um beispielsweise mittels galvanischer Prozesse, eine Aufdickung des als Kupferlage ausgebildeten Sicherungselements und somit bei Bedarf eine Erhöhung der Stromtragfähigkeit des Sicherungselements zu ermöglichen. Die Sicherungsvorrichtung kann in dieser Ausgestaltung beispielsweise auch ein weiteres Sicherungselement aufweisen, welches dann bevorzugt in einer weiteren äußeren Lage angeordnet ist. Beispielsweise kann das Sicherungselement in einer obersten Lage und das weitere Sicherungselement in einer untersten Lage angeordnet sein, wobei jeweils benachbart zu der obersten Lage und/oder der untersten Lage zumindest eine weitere Lage angeordnet ist, auf welcher das Heizelement und gegebenenfalls zumindest ein weiteres Heizelement angeordnet ist/sind. Das Sicherungselement und das Heizelement sind vorteilhaft als Kupferlagen mit unterschiedlicher Kupferdicke ausgebildet. Der Ausdruck "Kupferdicke" meint in diesem Zusammenhang eine Einheit aus der Leiterplattentechnik, welche ein Gewicht einer Kupferlage pro Fläche der Leiterplatte beschreibt und welche in oz/ft² oder in g/m² angegeben wird. Aus der Kupferdicke lässt sich die Dicke der Kupferlage ableiten. Beispielsweise kann das als eine erste Kupferlage ausgebildete Sicherungselement eine Kupferdicke von 2 oz/ft², was in etwa 610 g/m² entspricht, und damit eine Dicke von ca. 70 µm aufweisen. Das Heizelement kann beispielsweise als eine zweite Kupferlage mit einer Kupferdicke von 0,5 oz/ft², was in etwa 152 g/m² entspricht, ausgebildet sein und damit eine Kupferdicke von ca. 17,5 µm aufweisen.

Des Weiteren wird vorgeschlagen, dass das Sicherungselement zur Verbindung mit einem elektrisch positiven Anschluss der Akkuzelle vorgesehen ist und dass die Steuereinheit ein Schaltelement aufweist, welches als ein NPN-Bipolartransistor oder als ein N-Kanal-MOSFET ausgebildet ist. Hierdurch kann vorteilhaft eine besonders einfache Aktvierung der Heizeinheit in dem kritischen Zustand der Akkuzelle ermöglicht werden, für den Fall, dass das Sicherungselement zur Verbindung mit einem elektrisch positiven Anschluss der Akkuzelle vorgesehen ist. In einer alternativen vorteilhaften Ausgestaltung wird vorgeschlagen, dass das Sicherungselement zur Verbindung mit einem elektrisch negativen Anschluss der Akkuzelle vorgesehen ist und dass die Steuereinheit ein Schaltelement aufweist, welches als ein PNP-Bipolartransistor oder als ein P-Kanal-MOSFET ausgebildet ist. Hierdurch kann vorteilhaft eine besonders einfache Aktvierung der Heizeinheit in dem kritischen Zustand der Akkuzelle ermöglicht werden, für den Fall, dass das Sicherungselement zur Verbindung mit einem elektrisch negativen Anschluss der Akkuzelle vorgesehen ist.

Ferner wird vorgeschlagen, dass die Heizeinheit zu einer direkten Beheizung eines Bereichs des Sicherungselements vorgesehen ist. Hierdurch kann vorteilhaft ein besonders sicheres Auslösen des Schutzelements in einem kritischen Zustand der Akkuzelle ermöglicht werden. Bei dem Bereich des Sicherungselements, zu dessen direkter Beheizung die Heizeinheit vorgesehen ist, handelt es sich vorzugsweise um einen sogenannten Hotspot des Sicherungselements. Alternativ oder zusätzlich wird vorgeschlagen, dass die Heizeinheit zu einer direkten Beheizung zumindest eines Umgebungsbereichs des Sicherungselements vorgesehen ist. Wenn die Heizeinheit zu einer direkten Beheizung des zumindest einen Umgebungsbereichs des Sicherungselements vorgesehen ist, kann eine indirekte Beheizung des Sicherungselements durch Wärmeleitung, insbesondere über zumindest ein weiteres Element, beispielsweise das Trägerelement, erfolgen. Wenn die Heizeinheit ausschließlich zur Beheizung zumindest eines Umgebungsbereichs des Sicherungselements vorgesehen ist, kann vorteilhaft vermieden werden, dass ein direkter Kontakt zwischen dem Hotspot des Sicherungselements und dem Heizelement erzeugt wird, was ansonsten zu einer Überschreitung der Temperaturstabilität des Heizelements führen könnte. Wenn die Heizeinheit zusätzlich zur Beheizung des Bereichs des Sicherungselements zur Beheizung zumindest eines Umgebungsbereichs des Sicherungselements vorgesehen ist, kann ein besonders zuverlässiges Auslösen weiter begünstigt werden.

Weiterhin wird vorgeschlagen, dass das Sicherungselement dazu vorgesehen ist, beim Auslösen eine elektrisch leitende Verbindung zwischen der Heizeinheit und der Akkuzelle zu trennen. Hierdurch kann vorteilhaft eine Sicherheit noch weiter erhöht werden. Es kann insbesondere verhindert werden, dass die Heizeinheit nach Auslösen des Sicherungselements weiter mit elektrischer Energie versorgt wird und die damit einhergehenden Gefahren, beispielsweise eine Brandgefahr, kann wirksam verhindert werden.

Die Erfindung betrifft ferner einen Akkupack mit zumindest einer Akkuzelle und mit zumindest einer mit der Akkuzelle verbundenen Sicherungsvorrichtung nach einer der vorhergehend beschriebenen Ausgestaltungen. Ein derartiger Akkupack zeichnet sich insbesondere durch seine vorteilhaften Eigenschaften im Hinblick auf eine Sicherheit aus, welche durch die erfindungsgemäße Sicherungsvorrichtung erreicht werden können.

Die Erfindung betrifft zudem ein Verfahren zur Herstellung einer Sicherungsvorrichtung gemäß Anspruch 14.

Durch ein derartiges Verfahren kann die erfindungsgemäße Sicherungsvorrichtung besonders einfach und effizient hergestellt werden. Das Verfahren umfasst vorzugsweise zumindest zwei Verfahrensschritte. Das Sicherungselement kann beispielsweise in einem ersten Verfahrensschritt, zum Beispiel in Form einer Kupferbahn oder dergleichen, insbesondere mittels aus dem Stand der Technik bekannter geeigneter Prozesse, auf die Leiterplatte aufgebracht werden. In einem anschließenden zweiten Verfahrensschritt kann das Heizelement auf die Leiterplatte aufgebracht werden, beispielsweise in Form einer weiteren Kupferbahn oder in Form eines als elektrischen und/oder elektronischen Bauteils, zum Beispiel als, insbesondere temperaturveränderlicher, Widerstand und/oder als Halbleiterbauelement oder dergleichen.

Die erfindungsgemäße Sicherungsvorrichtung soll hierbei nicht auf die oben beschriebene Anwendung und Ausführungsform beschränkt sein. Insbesondere kann die erfindungsgemäße Sicherungsvorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung.

Es zeigen:
- Fig. 1: einen Akkupack mit zumindest einer Akkuzelle und mit einer mit der Akkuzelle verbundenen Sicherungsvorrichtung in einer schematischen perspektivischen Darstellung,
- Fig. 2: ein schematisches Blockschaltbild der Sicherungsvorrichtung,
- Fig. 3: die Sicherungsvorrichtung in einer schematischen Draufsicht und einer schematischen Seitenansicht,
- Fig. 4: ein schematisches Verfahrensfließbild zur Darstellung eines Verfahrens zur Herstellung der Sicherungsvorrichtung,
- Fig. 5: ein weiteres Beispiel einer Sicherungsvorrichtung in einer schematischen Draufsicht und einer schematischen Seitenansicht,
- Fig. 6: eine erfindungsgemäße Sicherungsvorrichtung in zwei schematischen Draufsichten und einer schematischen Seitenansicht,
- Fig. 7: ein weiteres Ausführungsbeispiel einer Sicherungsvorrichtung in zwei schematischen Draufsichten und einer schematischen Seitenansicht,
- Fig. 8: ein weiteres Ausführungsbeispiel einer Sicherungsvorrichtung in einer schematischen Darstellung und
- Fig. 9: ein weiteres Ausführungsbeispiel einer Sicherungsvorrichtung in einer schematischen Darstellung.

### Beschreibung der Ausführungsbeispiele

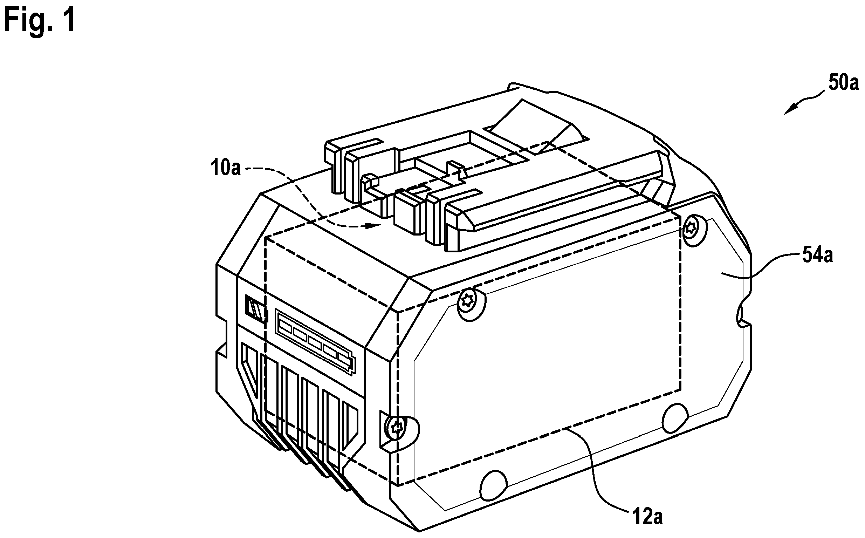

Figur 1 zeigt einen Akkupack 50a mit zumindest einer Akkuzelle 12a und mit zumindest einer mit der Akkuzelle 12a verbundenen Sicherungsvorrichtung 10a in einer schematisch perspektivischen Darstellung. Vorliegend ist der Akkupack 50a beispielsweise als ein Handwerkzeugmaschinenakkupack ausgebildet. Alternativ ist jedoch auch denkbar, dass der Akkupack 50a als ein anderer, einem Fachmann als sinnvoll erscheinender Akkupack ausgebildet ist. Der Akkupack 50a weist ein Gehäuse 54a auf, in dem die zumindest eine Akkuzelle 12a und die Sicherungsvorrichtung 10a angeordnet sind.

Der Akkupack 50a kann eine Vielzahl von Akkuzellen 12a aufweisen, welche miteinander elektrisch in Reihe und/oder elektrisch parallel verschaltet sind. Der Ackupack 50a kann für jede Akkuzelle 12a eine eigene Sicherungsvorrichtung 10a aufweisen. Denkbar ist auch, dass die Sicherungsvorrichtung 10a zur Sicherung mehrerer Akkuzellen 12a des Akkupacks 50a vorgesehen ist. Die nachfolgende Beschreibung beschränkt sich der Einfachheit halber auf eine Sicherungsvorrichtung 10a für eine Akkuzelle 12a des Akkupacks 50a.

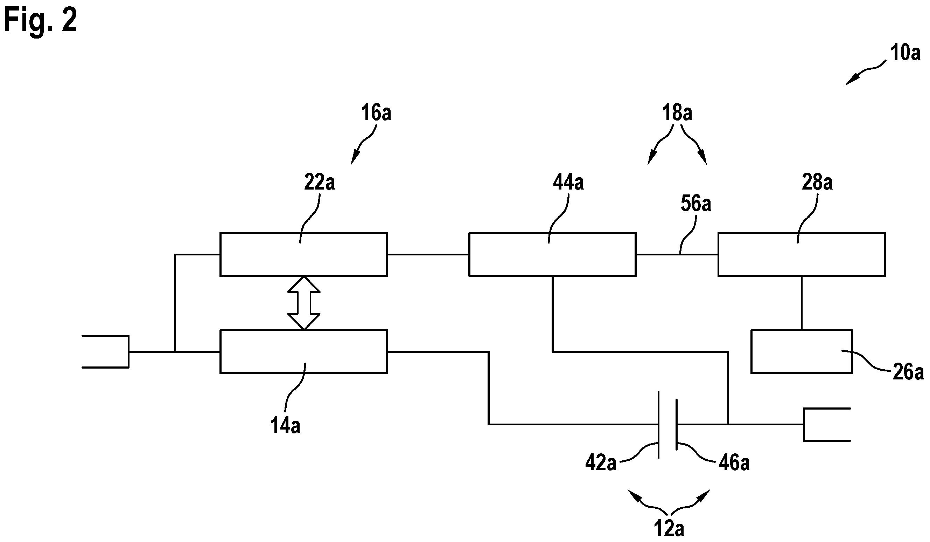

Figur 2 zeigt ein schematisches Blockschaltbild der Sicherungsvorrichtung 10a für die zumindest eine Akkuzelle 12a. Die Sicherungsvorrichtung 10a umfasst ein Sicherungselement 14a zur Unterbrechung eines Stromflusses von der Akkuzelle 12a in einem kritischen Zustand der Akkuzelle 12a. Bei einem kritischen Zustand kann es sich, ohne darauf beschränkt zu sein, beispielsweise um einen Kurzschluss der Akkuzelle 12a und/oder um eine Überhitzung der Akkuzelle 12a und/oder um einen Überdruck der Akkuzelle 12a und/oder dergleichen handeln.

Die Sicherungsvorrichtung 10a umfasst ferner eine Heizeinheit 16a. Die Heizeinheit 16a ist mit dem Sicherungselement 14a gekoppelt. Die Heizeinheit 16a weist zumindest ein Heizelement 22a auf. Vorliegend ist das Heizelement 22a der Heizeinheit 16a thermisch mit dem Sicherungselement 14a gekoppelt. Die Heizeinheit 16a ist zur Unterstützung eines Auslösens des Sicherungselements 14a vorgesehen.

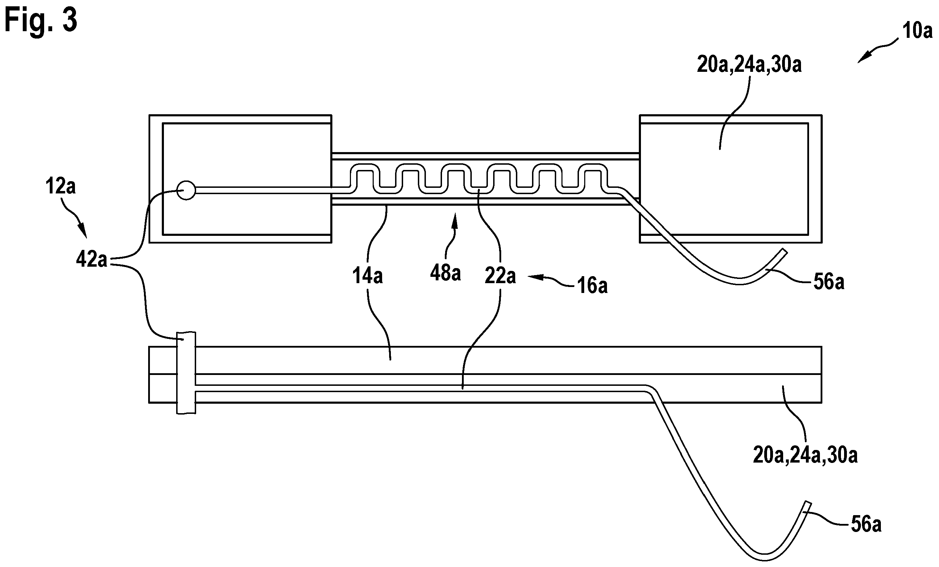

Die Sicherungsvorrichtung 10a weist zumindest ein Trägerelement 20a (vgl. Figur 3) zur Aufnahme des Sicherungselements 14a und zumindest eines Heizelements 22a der Heizeinheit 16a auf.

Die Akkuzelle 12a weist einen elektrisch positiven Anschluss 42a sowie einen elektrisch negativen Anschluss 46a auf. Die Heizeinheit 16a ist zur Energieversorgung mit zumindest einem der Anschlüsse 42a, 46a der Akkuzelle 12a verbunden.

Die Sicherungsvorrichtung 10a umfasst zudem eine Steuereinheit 18a zum Aktvieren der Heizeinheit 16a in dem kritischen Zustand. Die Steuereinheit 18a weist zumindest ein Schaltelement 44a auf. In dem kritischen Zustand aktiviert die Steuereinheit 18a die Heizeinheit 16a über das Schaltelement 44a.

Vorliegend ist das Sicherungselement 14a zur Verbindung mit dem elektrisch positiven Anschluss 42a der Akkuzelle 12a vorgesehen und das Schaltelement 44a der Steuereinheit 18a ist als ein NPN-Bipolartransistor oder als ein N-Kanal-MOSFET ausgebildet. Alternativ kann das Sicherungselement 14a zur Verbindung mit dem elektrisch negativen Anschluss 46a der Akkuzelle 12a vorgesehen sein, wobei das Schaltelement 44a der Steuereinheit 18a dann als ein PNP-Bipolartransistor oder als ein P-Kanal-MOSFET ausgebildet ist.

Die Sicherungsvorrichtung 10a weist eine Sensoreinheit 26a zur Erfassung zumindest eines Statusparameters der Akkuzelle 12a auf. Bei einem Statusparameter der Akkuzelle 12a kann es sich beispielsweise um eine Temperatur und/oder einen Druck und/oder eine elektrische Spannung und/oder einen elektrischen Strom handeln. Die Sensoreinheit 26a umfasst einen oder mehrere Sensoren (nicht dargestellt) zur Erfassung des zumindest einen Statusparameters, welche(r) an und/oder in der Akkuzelle 12a angeordnet und je nach Art des zu erfassenden Statusparameters entsprechend ausgebildet sein können.

Die Steuereinheit 18a weist einen Mikroprozessor 28a auf. Der Mikroprozessor 28a ist zur Charakterisierung des Zustands der Akkuzelle 12a basierend auf dem durch die Sensoreinheit 26a erfassten Statusparameter vorgesehen. Der Mikroprozessor 28a ist über eine Steuerleitung 56a der Steuereinheit 18a mit dem Schaltelement 44a verbunden. In einem Betriebszustand der Sicherungsvorrichtung 10a überwacht der Mikroprozessor 28a den zumindest einen Statusparameter. Überschreitet der zumindest eine Statusparameter einen vorgegebenen Grenzwert, beispielsweise eine zulässige Maximaltemperatur der Akkuzelle 12a, welcher in einem Speicher des Mikroprozessors 28a gespeichert ist, erkennt der Mikroprozessor, dass ein kritischer Zustand der Akkuzelle 12a vorliegt und aktiviert die Heizeinheit 16a über das Schaltelement 44a.

Figur 3 zeigt die Sicherungsvorrichtung 10a in zwei schematischen Ansichten. In einer oberen Ansicht der Figur 3 ist die Sicherungsvorrichtung 10a in einer schematischen Draufsicht gezeigt. Eine untere Ansicht der Figur 3 zeigt die Sicherungsvorrichtung 10a in einer schematischen Seitenansicht.

Vorliegend ist das Trägerelement 20a der Sicherungsvorrichtung 10a als eine Leiterplatte 24a ausgebildet ist. Das Sicherungselement 14a und das zumindest eine Heizelement 22a der Heizeinheit 16a sind vorliegend gemeinsam auf der Leiterplatte 24a angeordnet.

Die Sicherungsvorrichtung 10a weist zumindest einen Isolator 30a auf, um das Sicherungselement 14a und das Heizelement 22a elektrisch voneinander zu isolieren. Vorliegend fungiert das Trägerelement 20a, also die Leiterplatte 24a, als der Isolator 30a.

Die Heizeinheit 16a ist in dem vorliegenden Ausführungsbeispiel zu einer direkten Beheizung eines Bereichs 48a des Sicherungselements 14a vorgesehen.

Das Sicherungselement 14a ist dazu vorgesehen, beim Auslösen eine elektrisch leitende Verbindung zwischen der Heizeinheit 16a und der Akkuzelle 12a zu trennen. Vorliegend ist das Sicherungselement 14a dazu vorgesehen, eine elektrisch leitende Verbindung, über welche das zumindest eine Heizelement 22a der Heizeinheit 16a mit der positiven Anschlussstelle 42a der Akkuzelle 12a verbunden ist, beim Auslösen zu trennen, sodass beim Auslösen des Sicherungselements 14a nicht nur ein Stromfluss von der Akkuzelle 12a zu externen Verbrauchern, beispielsweise einer Antriebseinheit einer Handwerkzeugmaschine (nicht dargestellt), welche mittels des Akkupacks 50a (vgl. Figur 1) mit Energie versorgt wird, sondern auch ein Stromfluss von der Akkuzelle 12a zu der Heizeinheit 16a unterbrochen wird.

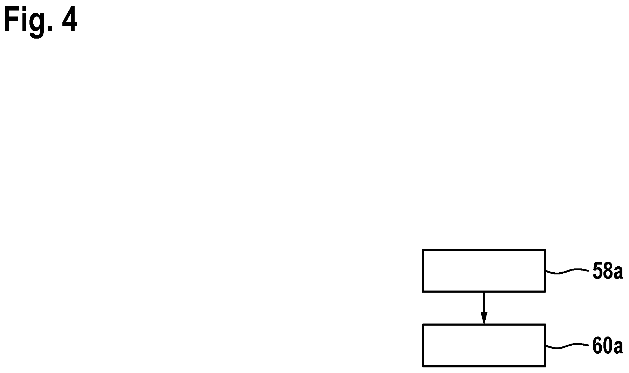

Figur 4 zeigt ein schematisches Verfahrensfließbild eines Verfahrens zur Herstellung der Sicherungsvorrichtung 10a für die Akkuzelle 12a. Das Verfahren umfasst zumindest zwei Verfahrensschritte 58a, 60a. In einem ersten Verfahrensschritt 58a des Verfahrens wird das Sicherungselement 14a, beispielsweise als verengte Kupferbahn, auf die Leiterplatte 24a aufgebracht. In einem zweiten Verfahrensschritt 60a des Verfahrens wird das zumindest eine Heizelement 22a der Heizeinheit 16a, beispielsweise in Form einer Kupferstruktur, welche zum Beispiel spiralförmig oder mäanderförmig sein kann, auf die Leiterplatte 24a aufgebracht.

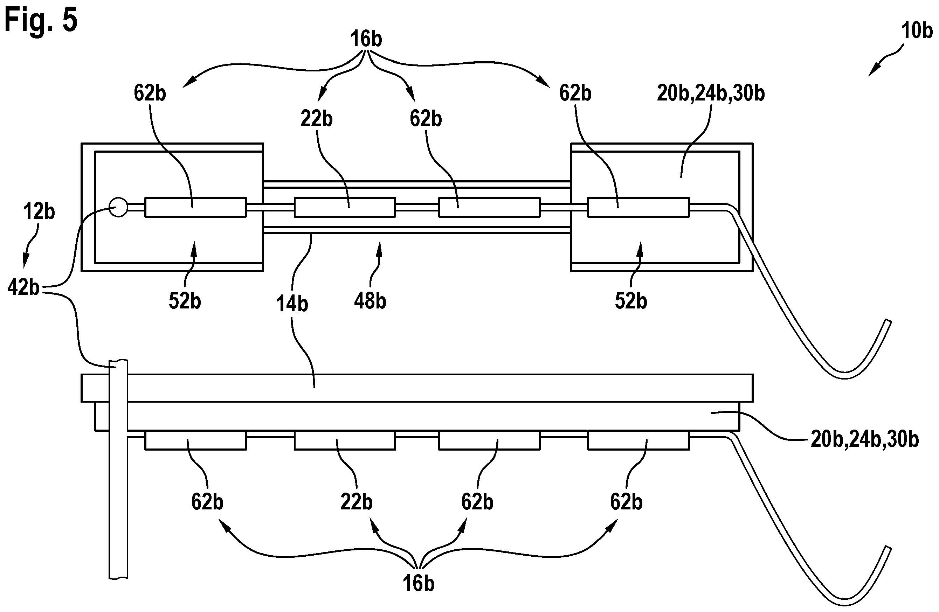

In den Figuren 5 bis 9 sind fünf weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 9 ist der Buchstabe a durch die Buchstaben b bis f ersetzt.

Figur 5 zeigt ein weiteres Ausführungsbeispiel einer Sicherungsvorrichtung 10b für eine Akkuzelle 12b in zwei schematischen Ansichten. In einer oberen Ansicht der Figur 5 ist die Sicherungsvorrichtung 10b in einer schematischen Draufsicht gezeigt. Eine untere Ansicht der Figur 5 zeigt die Sicherungsvorrichtung 10b in einer schematischen Seitenansicht.

Analog zu dem vorhergehenden Ausführungsbeispiel weist die Sicherungsvorrichtung 10b ein Sicherungselement 14b zur Unterbrechung eines Stromflusses von der Akkuzelle 12b in einem kritischen Zustand der Akkuzelle 12b und eine Heizeinheit 16b, welche mit dem Sicherungselement 14b gekoppelt und zur Unterstützung eines Auslösens des Sicherungselements 14b vorgesehen ist, auf. Die Heizeinheit 16b weist zumindest ein Heizelement 22b auf.

Die Sicherungsvorrichtung 10b weist außerdem eine Steuereinheit auf. Die Steuereinheit der Sicherungsvorrichtung 10b ist in der Figur 5 nicht dargestellt und hinsichtlich ihrer Funktionsweise sei auf die obige Beschreibung zur Steuereinheit 18a in dem ersten Ausführungsbeispiel verwiesen.

Die Sicherungsvorrichtung 10b weist wiederum zumindest ein Trägerelement 20b zur Aufnahme des Sicherungselements 14b und des zumindest einen Heizelements 22b der Heizeinheit 16b auf. Analog zu dem vorhergehenden Ausführungsbeispiel ist das Trägerelement 20b als eine Leiterplatte 24b ausgebildet, welche zugleich auch als Isolator 30b fungiert, um das Sicherungselement 24b und das Heizelement 22b elektrisch voneinander zu isolieren.

Im Unterschied zu dem ersten Ausführungsbeispiel weist die Heizeinheit 16b neben dem Heizelement 22b zusätzlich mehrere weitere Heizelement 62b auf. Die weiteren Heizelemente 62b sind ebenfalls auf dem als Leiterplatte 24b ausgebildeten Trägerelement 20b angeordnet.

Ein weiterer Unterschied zu dem vorhergehenden Ausführungsbeispiel besteht darin, dass das Heizelement 22b und die weiteren Heizelemente 62b der Heizeinheit 16b nicht als Kupferstrukturen, sondern als temperaturveränderliche Widerstände, zum Beispiel als PTCs, ausgebildet sind.

Die Heizeinheit 16b ist in dem vorliegenden Ausführungsbeispiel wiederum zu einer direkten Beheizung eines Bereichs 48b des Sicherungselements 14b vorgesehen. Die Beheizung des Bereichs 48b des Sicherungselements 14b erfolgt in einem kritischen Zustand der Akkuzelle 12b mittels des Heizelements 22b der Heizeinheit 16b. Zudem ist die Heizeinheit 16b auch zu einer direkten Beheizung zumindest eines Umgebungsbereichs 52b des Sicherungselements 14b vorgesehen. Die Beheizung des zumindest einen Umgebungsbereichs 52b des Sicherungselements 14b erfolgt in einem kritischen Zustand der Akkuzelle 12b mittels des weiteren Heizelements 62b der Heizeinheit 16b, wobei eine Unterstützung eines Auslösens des Sicherungselements 14b durch Wärmeleitung der Leiterplatte 24b aus dem Umgebungsbereich 52b zu dem Schutzelement 14b begünstigt wird. Es wäre auch denkbar, dass das Heizelement 22b und die Heizelemente 62b der Heizeinheit 16b ausschließlich zu einer direkten Beheizung zumindest eines Umgebungsbereichs 52b des Sicherungselements 14b vorgesehen und entsprechend angeordnet sind, beispielsweise um ein Überschreiten einer Temperaturstabilität der Heizelemente 22b, 62b in dem kritischen Zustand zu vermeiden.

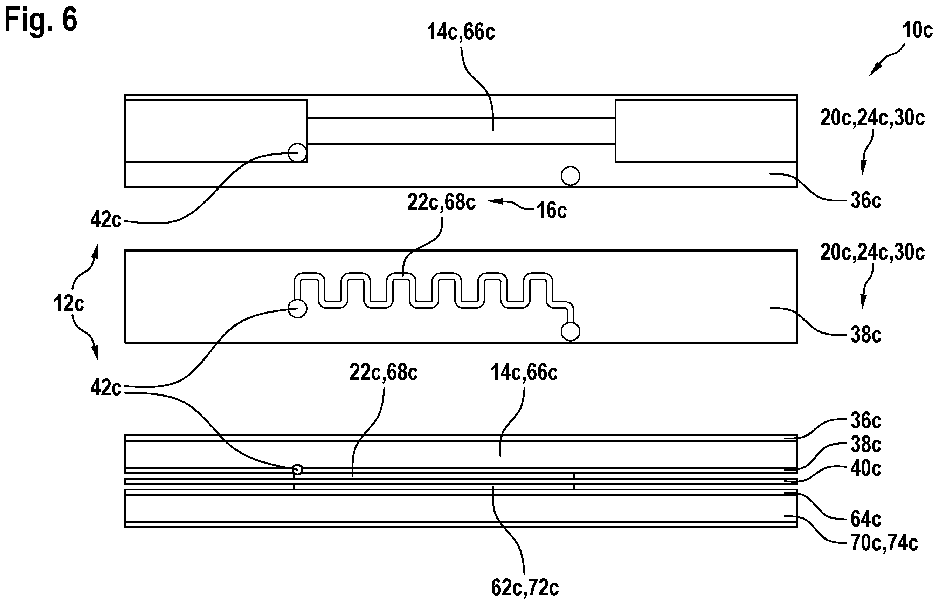

Figur 6 zeigt ein weiteres Ausführungsbeispiel einer Sicherungsvorrichtung 10c für eine Akkuzelle 12c in drei schematischen Ansichten.

Analog zu den vorhergehenden Ausführungsbeispielen weist die Sicherungsvorrichtung 10c ein Sicherungselement 14c zur Unterbrechung eines Stromflusses von der Akkuzelle 12c in einem kritischen Zustand der Akkuzelle 12c und eine Heizeinheit 16c, welche mit dem Sicherungselement 14c gekoppelt und zur Unterstützung eines Auslösens des Sicherungselements 14c vorgesehen ist, auf. Die Heizeinheit 16c weist wiederum zumindest ein Heizelement 22c auf.

Die Sicherungsvorrichtung 10c weist, analog zu den vorhergehenden Ausführungsbeispielen, zumindest ein Trägerelement 20c zur Aufnahme des Sicherungselements 14c und des zumindest einen Heizelements 22c der Heizeinheit 16c auf. Das Trägerelement 20c als eine Leiterplatte 24c ausgebildet, welche zugleich auch als Isolator 30c fungiert, um das Sicherungselement 24c und das Heizelement 22c elektrisch voneinander zu isolieren.

Die Sicherungsvorrichtung 10c weist außerdem eine Steuereinheit auf. Die Steuereinheit der Sicherungsvorrichtung 10c ist in der Figur 6 nicht dargestellt und hinsichtlich ihrer Funktionsweise sei auf die obige Beschreibung zur Steuereinheit 18a in dem ersten Ausführungsbeispiel verwiesen.

Gemäß der Erfindung ist die Leiterplatte 24c mehrlagig, vorliegend beispielsweise vierlagig, ausgebildet. Eine obere Ansicht der Figur 6 zeigt eine erste Lage 36c der Leiterplatte 24c in einer schematischen Draufsicht. Das Sicherungselement 14c ist als eine erste Kupferlage 66c ausgebildet und auf der ersten Lage 36c der Leiterplatte 24c angeordnet.

Eine mittlere Ansicht der Figur 6 zeigt eine zweite Lage 38c der Leiterplatte 24c in einer schematischen Draufsicht. Das Heizelement 22c der Heizeinheit 16c ist als eine zweite Kupferlage 68c ausgebildet und auf der zweiten Lage 38c der Leiterplatte 24c angeordnet.

Eine untere Ansicht der Figur 6 zeigt das als mehrlagige Leiterplatte 24c ausgebildete Trägerelement 20c in einer schematischen Seitenansicht. Das Heizelement 22c und das Sicherungselement 24c sind in zueinander benachbarten Lagen 36c, 38c auf dem Trägerelement 20c angeordnet.

Die erste Kupferlagen 66c und die zweite Kupferlage 68c weisen unterschiedliche Dicken auf. Vorliegend weist das als erste Kupferlage 66c ausgebildete Sicherungselement 14c eine größere Dicke auf als das als zweite Kupferlage 68c ausgebildete Heizelement 22c. Beispielsweise kann die erste Kupferlage 66c mit einer Kupferdicke 2 oz/ft², was in etwa 610 g/m² entspricht, auf die erste Lage 36c der Leiterplatte 24c aufgebracht sein und eine Dicke von ca. 70 µm aufweisen und die zweite Kupferlage 68c kann mit einer Kupferdicke 0,5 oz/ft² was in etwa 152 g/m² entspricht, auf die zweite Lage 38c der Leiterplatte 24c aufgebracht sein und eine Dicke von ca. 17,5 µm aufweisen.

Die Heizeinheit 16c weist vorliegend ein weiteres Heizelement 62c auf, welches auf einer dritten Lage 40c der Leiterplatte 24c als dritte Kupferlage 72c aufgebracht ist. Eine Dicke der dritten Kupferlage 72c entspricht vorliegend der Dicke der zweiten Kupferlage 68c.

Die Sicherungsvorrichtung 10c weist vorliegend ein weiteres Sicherungselement 70c auf, welches auf einer vierten Lage 64c der Leierplatte 24c als vierte Kupferlage 74c aufgebracht ist. Eine Dicke der vierten Kupferlage 74c entspricht vorliegend der Dicke der ersten Kupferlage 66c. Das weitere Heizelement 62c der Heizeinheit 16c ist vorliegend zur Unterstützung eines Auslösens des weiteren Sicherungselements 70c vorgesehen. Das weitere Sicherungselement 70c und das weitere Heizelement 62c sind in zueinander benachbarten Lagen 40c, 64c auf dem Trägerelement 20c angeordnet.

Vorliegend sind das Sicherungselement 14c und das weitere Sicherungselement 70c der Sicherungsvorrichtung 10c jeweils in den äußeren Lagen, also in der ersten Lage 36c und der vierten Lage 64c, der Leiterplatte 24c angeordnet. Hierdurch kann, beispielsweise mittels galvanischer Prozesse, eine Aufdickung der ersten Kupferlage 66c und/oder der vierten Kupferlage 74c ermöglicht werden, um bei Bedarf die Stromtragfähigkeit des Sicherungselements 14c und/oder des weiteren Sicherungselements 70c zu erhöhen.

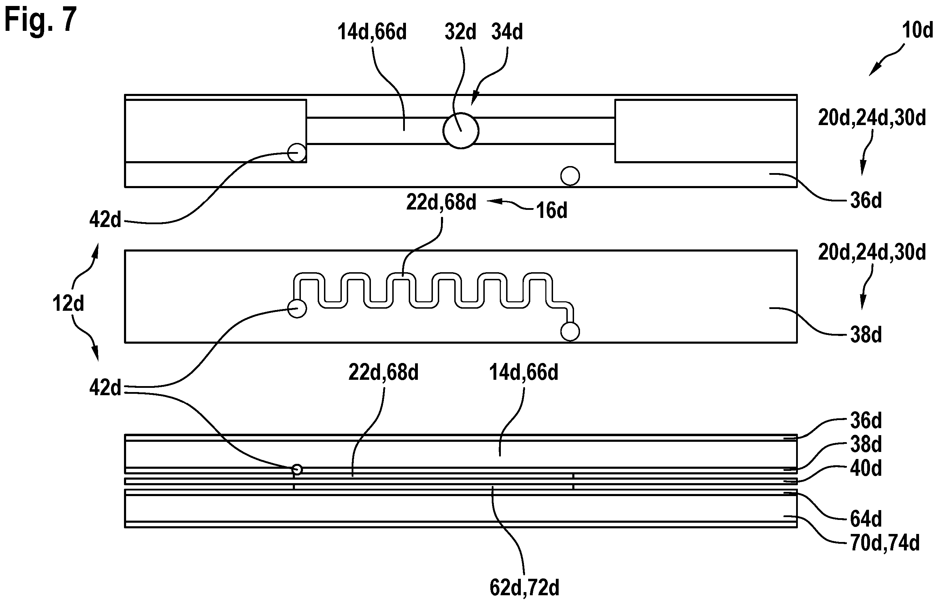

Figur 7 zeigt ein weiteres Ausführungsbeispiel einer Sicherungsvorrichtung 10d für eine Akkuzelle 12d in drei schematischen Ansichten.

Analog zu den vorhergehenden Ausführungsbeispielen weist die Sicherungsvorrichtung 10d ein Sicherungselement 14d zur Unterbrechung eines Stromflusses von der Akkuzelle 12d in einem kritischen Zustand der Akkuzelle 12d und eine Heizeinheit 16d, welche mit dem Sicherungselement 14d gekoppelt und zur Unterstützung eines Auslösens des Sicherungselements 14d vorgesehen ist, auf. Die Heizeinheit 16d weist wiederum zumindest ein Heizelement 22d auf.

Die Sicherungsvorrichtung 10d weist, analog zu den vorhergehenden Ausführungsbeispielen, zumindest ein Trägerelement 20d zur Aufnahme des Sicherungselements 14d und des zumindest einen Heizelements 22d der Heizeinheit 16d auf. Das Trägerelement 20d als eine Leiterplatte 24d ausgebildet, welche zugleich auch als Isolator 30d fungiert, um das Sicherungselement 24d und das Heizelement 22d elektrisch voneinander zu isolieren.

Die Sicherungsvorrichtung 10d weist ebenso eine Steuereinheit auf, welche in der Figur 7 nicht dargestellt ist, sodass hinsichtlich ihrer Funktionsweise auf die obige Beschreibung zur Steuereinheit 18a in dem ersten Ausführungsbeispiel verwiesen sei.

Analog zu dem vorhergehenden Ausführungsbeispiel ist die Leiterplatte 24d mehrlagig ausgebildet. Die Sicherungsvorrichtung 10d weist in Bezug auf die Leiterplatte 24d einen im Wesentlichen identischen strukturellen Aufbau zu der Sicherungsvorrichtung 10c auf, weshalb diesbezüglich auf die obige Beschreibung zur Figur 6 verwiesen sei.

Im Unterschied zu dem vorhergehenden Ausführungsbeispiel weist die Sicherungsvorrichtung 10d zumindest ein Reaktionselement 32d auf. Das Reaktionselement 32d ist dazu vorgesehen, unter thermischem Einfluss der Heizeinheit 16d mit dem Sicherungselement 14d zu reagieren und dessen physikalische und/oder chemische Eigenschaften zu verändern, um ein Auslösen des Sicherungselements 14d zu begünstigen.

Vorliegend ist das Reaktionselement 32d in einem Teilbereich 34d auf das Sicherungselement 14d aufgebracht. Alternativ oder zusätzlich könnte das Reaktionselement 32d jedoch auch in weiteren Teilbereichen (nicht dargestellt) des Sicherungselements 14d oder vollflächig, beispielsweise als Beschichtung, auf dem Sicherungselement 14d aufgebracht sein.

Vorliegend ist das Reaktionselement 32d aus Zinn ausgebildet. Das Reaktionselement kann beispielsweise als ein Lötpunkt auf das Sicherungselement 14d aufgebracht sein. Unter dem thermischen Einfluss der Heizeinheit 16d reagiert das aus Zinn ausgebildete Reaktionselement 32d mit dem als Kupferlage 66d ausgebildeten Sicherungselement 14d in dem Teilbereich zu einer Zinnbronze, welche einen niedrigeren Schmelzpunkt aufweist, als das reine Kupfer des Sicherungselements 14d.

Das Reaktionselement 32d ist nur in dem vorliegenden Ausführungsbeispiel der Figur 7 gezeigt, wobei der Fachmann erkennt, dass die Funktionsweise des Reaktionselements 32d als solche nicht auf die spezielle Struktur der Sicherungsvorrichtung 10d beschränkt ist und auch auf sämtliche der vorhergehenden und nachfolgenden Ausführungsbeispiele sinngemäß übertragen werden kann.

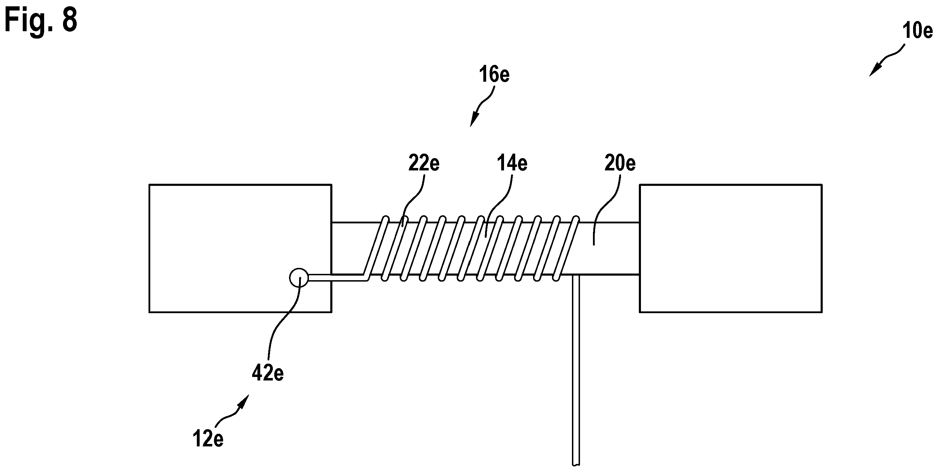

Figur 8 zeigt ein weiteres Ausführungsbeispiel einer Sicherungsvorrichtung 10e für eine Akkuzelle 12e in einer schematischen Darstellung.

Analog zu den vorhergehenden Ausführungsbeispielen weist die Sicherungsvorrichtung 10e ein Sicherungselement 14e zur Unterbrechung eines Stromflusses von der Akkuzelle 12e in einem kritischen Zustand der Akkuzelle 12e und eine Heizeinheit 16e, welche mit dem Sicherungselement 14e gekoppelt und zur Unterstützung eines Auslösens des Sicherungselements 14e vorgesehen ist, auf. Die Heizeinheit 16e weist wiederum zumindest ein, vorliegend genau ein, Heizelement 22e auf.

Die Sicherungsvorrichtung 10e weist, analog zu den vorhergehenden Ausführungsbeispielen, zumindest ein Trägerelement 20e zur Aufnahme des Sicherungselements 14e und des zumindest einen Heizelements 22e der Heizeinheit 16e auf.

Im Unterschied zu den vorhergehenden Ausführungsbeispielen ist das Sicherungselement 14e einstückig mit dem Trägerelement 14e ausgebildet. Das Sicherungselement 14e ist vorliegend als eine Blechstreifensicherung ausgebildet.

Das Heizelement 22e der Heizeinheit 16e ist vorliegend als ein elektrisch isolierter Draht ausgebildet und direkt an dem Sicherungselement 14e platziert, beispielsweise um das Sicherungselement 14e gewickelt. Eine Isolationsschicht (nicht dargestellt) des Drahts fungiert zugleich als Isolator der Sicherungsvorrichtung 10e, um das Sicherungselement 14e und das Heizelement 22e elektrisch voneinander zu isolieren.

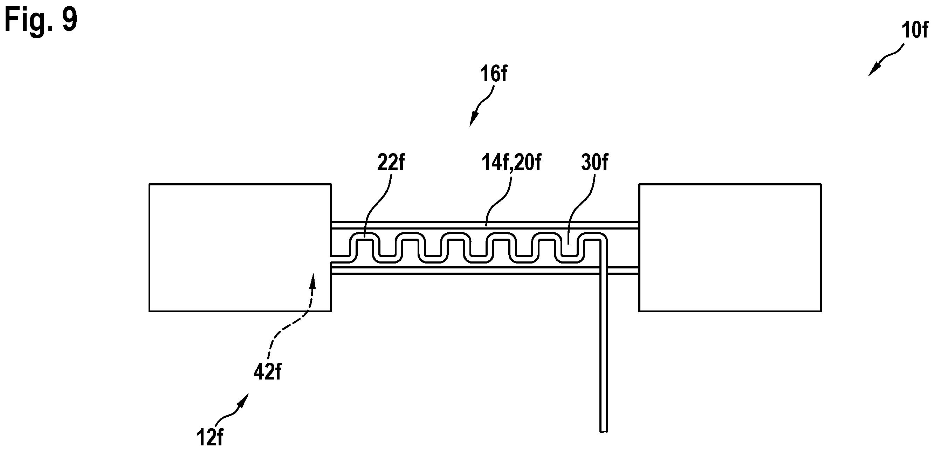

Figur 9 zeigt ein weiteres Ausführungsbeispiel einer Sicherungsvorrichtung 10f für eine Akkuzelle 12f in einer schematischen Darstellung.

Analog zu den vorhergehenden Ausführungsbeispielen weist die Sicherungsvorrichtung 10f ein Sicherungselement 14f zur Unterbrechung eines Stromflusses von der Akkuzelle 12f in einem kritischen Zustand der Akkuzelle 12f und eine Heizeinheit 16f, welche mit dem Sicherungselement 14f gekoppelt und zur Unterstützung eines Auslösens des Sicherungselements 14f vorgesehen ist, auf. Die Heizeinheit 16f weist wiederum zumindest ein, vorliegend genau ein, Heizelement 22f auf.

Die Sicherungsvorrichtung 10f weist, analog zu den vorhergehenden Ausführungsbeispielen, zumindest ein Trägerelement 20f zur Aufnahme des Sicherungselements 14f und des zumindest einen Heizelements 22f der Heizeinheit 16f auf.

Wie in dem vorhergehenden Ausführungsbeispiel der Figur 8 ist das Sicherungselement 14f einstückig mit dem Trägerelement 14f ausgebildet. Das Sicherungselement 14f ist vorliegend als eine Blechstreifensicherung ausgebildet.

Das Heizelement 22f der Heizeinheit 16f ist im Unterschied zu dem vorhergehenden Ausführungsbeispiel der Figur 8 direkt aus abgezweigten Teilen des Sicherungselements 14f ausgebildet.

Die Sicherungsvorrichtung 10f weist zumindest einen Isolator 30f auf, um das Sicherungselement 14f und das Heizelement 22f elektrisch voneinander zu isolieren. Vorliegend ist der Isolator 30f als eine Isolationsschicht ausgebildet, welche zwischen dem Sicherungselement 14f und dem Heizelement 22f der Heizeinheit 16f angeordnet ist.

## Patentansprüche

1. Sicherungsvorrichtung (10a-f) für zumindest eine Akkuzelle (12a), mit einem Sicherungselement (14a-f) zur Unterbrechung eines Stromflusses von der Akkuzelle (12a) in einem kritischen Zustand der Akkuzelle (12a), mit einer Heizeinheit (16a-f), welche mit dem Sicherungselement (14a-f) thermisch und elektrisch und/oder mechanisch gekoppelt ist und zur Unterstützung eines Auslösens des Sicherungselements (14a-f) vorgesehen ist, und mit einer Steuereinheit (18a) zum Aktivieren der Heizeinheit (16a-f) in dem kritischen Zustand, **dadurch gekennzeichnet, dass** die Sicherungsvorrichtung (10a-f) zumindest ein Trägerelement (20a-f) zur Aufnahme des Sicherungselements (14a-f) und zumindest eines Heizelements (22a-f) der Heizeinheit (16a-f) aufweist, wobei das Trägerelement (20a-d) als eine mehrlagige Leiterplatte (24a-d) ausgebildet ist, wobei die Heizeinheit (16a-f) und das Sicherungselement (14a-f) in benachbarten Lagen des Trägerelements (20a-f) angeordnet sind.

2. Sicherungsvorrichtung (10e; 10f) nach Anspruch 1, **dadurch gekennzeichnet, dass** das Sicherungselement (14e; 14f) einstückig mit dem Trägerelement (20e; 20f) ausgebildet ist.

3. Sicherungsvorrichtung (10a-f) nach einem der vorhergehenden Ansprüche, **dadurch gekennzeichnet, dass** die Sicherungsvorrichtung (10a-e) eine Sensoreinheit (26a) zur Erfassung zumindest eines Statusparameters der Akkuzelle aufweist und die Steuereinheit einen Mikroprozessor (28a) zur Charakterisierung des Zustands der Akkuzelle (12a-f) basierend auf dem durch die Sensoreinheit (26a) erfassten Statusparameter aufweist.

4. Sicherungsvorrichtung (10a-f) nach einem der vorhergehenden Ansprüche, **dadurch gekennzeichnet, dass** die Sicherungsvorrichtung (10a-f) zumindest einen Isolator (30a-f) aufweist, um das Sicherungselement (14a-f) und das Heizelement (22a-f) elektrisch voneinander zu isolieren.

5. Sicherungsvorrichtung (10a-d) nach Anspruch 4, **dadurch gekennzeichnet, dass** das Trägerelement (20a-d) als der Isolator (30a-d) fungiert.

6. Sicherungsvorrichtung (10d) nach einem der vorhergehenden Ansprüche, **dadurch gekennzeichnet, dass** die Sicherungsvorrichtung (10d) zumindest ein Reaktionselement (32d) aufweist, welches zumindest in einem Teilbereich (34d) auf das Sicherungselement (14d) aufgebracht und dazu vorgesehen ist, unter thermischem Einfluss der Heizeinheit (16d) mit dem Sicherungselement (14d) zu reagieren und dessen physikalische und/oder chemische Eigenschaften zu verändern, um ein Auslösen zu begünstigen.

7. Sicherungsvorrichtung (10c; 10d) nach einem der vorhergehenden Ansprüche,
**dadurch gekennzeichnet, dass** das Heizelement (22c; 22d) und das Sicherungselement (14d; 14d) als Kupferlagen (66c, 68c; 66d; 68d) ausgebildet und in zueinander benachbarten Lagen (36c, 38c; 36d; 38d) auf dem Trägerelement (20c; 22d) angeordnet sind,.

8. Sicherungsvorrichtung (10a-f) nach einem der vorhergehenden Ansprüche, **dadurch gekennzeichnet, dass** das Sicherungselement (14a-f) zur Verbindung mit einem elektrisch positiven Anschluss (42a-f) der Akkuzelle (12a-f) vorgesehen ist und dass die Steuereinheit (18a) ein Schaltelement (44a) aufweist, welches als ein NPN-Bipolartransistor oder als ein N-Kanal-MOSFET ausgebildet ist.

9. Sicherungsvorrichtung (10a-f) nach einem der Ansprüche 1 bis 8 **, dadurch gekennzeichnet, dass** das Sicherungselement (14a-f) zur Verbindung mit einem elektrisch negativen Anschluss (46a) der Akkuzelle vorgesehen ist und dass die Steuereinheit ein Schaltelement (44a) aufweist, welches als ein PNP-Bipolartransistor oder als ein P-Kanal-MOSFET ausgebildet ist.

10. Sicherungsvorrichtung (10a-f) nach einem der vorhergehenden Ansprüche, **dadurch gekennzeichnet, dass** die Heizeinheit (16a-f) zu einer direkten Beheizung eines Bereichs (48a) des Sicherungselements (14a-f) vorgesehen ist.

11. Sicherungsvorrichtung (10b) nach einem der vorhergehenden Ansprüche, **dadurch gekennzeichnet, dass** die Heizeinheit (16b) zu einer direkten Beheizung zumindest eines Umgebungsbereichs (52b) des Sicherungselements (14b) vorgesehen ist.

12. Sicherungsvorrichtung (10a-f) nach einem der vorhergehenden Ansprüche, **dadurch gekennzeichnet, dass** das Sicherungselement (14a-f) dazu vorgesehen ist, beim Auslösen eine elektrisch leitende Verbindung zwischen der Heizeinheit (16a-f) und der Akkuzelle (12a-f) zu trennen.

13. Akkupack (50a) mit zumindest einer Akkuzelle (12a-f) und mit zumindest einer mit der Akkuzelle (12a-f) verbundenen Sicherungsvorrichtung (10a-f) nach einem der vorhergehenden Ansprüche.

14. Verfahren zur Herstellung einer Sicherungsvorrichtung (10a-d) nach einem der Ansprüche 1 bis 12, wobei ein Sicherungselement (14a-d) und zumindest ein Heizelement (22a-d) einer Heizeinheit (16a-d) auf einer Leiterplatte (24a-d) aufgebracht werden.

## Claims

1. Fuse device (10a-f) for at least one battery cell (12a), comprising a fuse element (14a-f) for interrupting a current flow from the battery cell (12a) in a critical state of the battery cell (12a), comprising a heating unit (16a-f), which is thermally and electrically and/or mechanically coupled to the fuse element (14a-f) and is provided for assisting tripping of the fuse element (14a-f), and comprising a control unit (18a) for activating the heating unit (16a-f) in the critical state, **characterized in that** the fuse device (10a-f) has at least one carrier element (20a-f) for receiving the fuse element (14a-f) and at least one heating element (22a-f) of the heating unit (16a-f), wherein the carrier element (20a-d) is in the form of a multi-layer printed circuit board (24a-d), wherein the heating unit (16a-f) and the fuse element (14a-f) are arranged in adjacent layers of the carrier element (20a-f).

2. Fuse device (10e; 10f) according to Claim 1, **characterized in that** the fuse element (14e; 14f) is formed in one piece with the carrier element (20e; 20f).

3. Fuse device (10a-f) according to either of the preceding claims, **characterized in that** the fuse device (10a-e) has a sensor unit (26a) for detecting at least one status parameter of the battery cell and the control unit has a microprocessor (28a) for characterizing the state of the battery cell (12a-f) based on the status parameter detected by the sensor unit (26a).

4. Fuse device (10a-f) according to any of the preceding claims, **characterized in that** the fuse device (10a-f) has at least one insulator (30a-f) in order to electrically insulate the fuse element (14a-f) and the heating element (22a-f) from each other.

5. Fuse device (10a-d) according to Claim 4, **characterized in that** the carrier element (20a-d) acts as the insulator (30a-d).

6. Fuse device (10d) according to any of the preceding claims, **characterized in that** the fuse device (10d) has at least one reaction element (32d), which is mounted on the fuse element (14d) at least in a sub-region (34d) and is intended to react with the fuse element (14d) under the thermal influence of the heating unit (16d) and to change the physical and/or chemical properties of the fuse element in order to promote tripping.

7. Fuse device (10c; 10d) according to any of the preceding claims, **characterized in that** the heating element (22c; 22d) and the fuse element (14d; 14d) are in the form of copper layers (66c, 68c; 66d; 68d) and are arranged in mutually adjacent layers (36c, 38c; 36d; 38d) on the carrier element (20c; 22d).

8. Fuse device (10a-f) according to any of the preceding claims, **characterized in that** the fuse element (14a-f) is intended to be connected to an electrically positive connection (42a-f) of the battery cell (12a-f) and **in that** the control unit (18a) has a switching element (44a), which is in the form of an NPN bipolar transistor or in the form of an N-channel MOSFET.

9. Fuse device (10a-f) according to any of Claims 1 to 8, **characterized in that** the fuse element (14a-f) is intended to be connected to an electrically negative connection (46a) of the battery cell and **in that** the control unit has a switching element (44a), which is in the form of a PNP bipolar transistor or in the form of a P-channel MOSFET.

10. Fuse device (10a-f) according to any of the preceding claims, **characterized in that** the heating unit (16a-f) is intended to directly heat a region (48a) of the fuse element (14a-f).

11. Fuse device (10b) according to any of the preceding claims, **characterized in that** the heating unit (16b) is intended to directly heat at least a surrounding region (52b) of the fuse element (14b).

12. Fuse device (10a-f) according to any of the preceding claims, **characterized in that** the fuse element (14a-f) is intended to disconnect an electrically conductive connection between the heating unit (16a-f) and the battery cell (12a-f) in the event of tripping.

13. Battery pack (50a) comprising at least one battery cell (12a-f) and comprising at least one fuse device (10a-f) according to any of the preceding claims connected to the battery cell (12a-f).

14. Method for producing a fuse device (10a-d) according to any of Claims 1 to 12, wherein a fuse element (14a-d) and at least one heating element (22a-d) of a heating unit (16a-d) are mounted on a printed circuit board (24a-d).

## Revendications

1. Dispositif de sécurité (10a-f) pour au moins une cellule de batterie (12a), comprenant un élément de sécurité (14a-f) destiné à interrompre un flux de courant provenant de la cellule de batterie (12a) dans un état critique de la cellule de batterie (12a), comprenant une unité de chauffage (16a-f) qui est couplée thermiquement et électriquement et/ou mécaniquement à l'élément de sécurité (14a-f) et qui est prévue pour favoriser un déclenchement de l'élément de sécurité (14a-f), et comprenant une unité de commande (18a) pour activer l'unité de chauffage (16a-f) dans l'état critique, **caractérisé en ce que** le dispositif de sécurité (10a-f) comprend au moins un élément de support (20a-f) pour recevoir l'élément de sécurité (14a-f) et au moins un élément chauffant (22a-f) de l'unité de chauffage (16a-f), l'élément de support (20a-d) étant conçu sous la forme d'une carte de circuit imprimé multicouche (24a-d), l'unité de chauffage (16a-f) et l'élément de sécurité (14a-f) étant disposés dans des couches adjacentes de l'élément de support (20a-f).

2. Dispositif de sécurité (10e ; 10f) selon la revendication 1, **caractérisé en ce que** l'élément de sécurité (14e ; 14f) est réalisé d'un seul tenant avec l'élément de support (20e ; 20f).

3. Dispositif de sécurité (10a-f) selon l'une quelconque des revendications précédentes, **caractérisé en ce que** le dispositif de sécurité (10a-e) comprend une unité de détection (26a) pour détecter au moins un paramètre d'état de la cellule de batterie et **en ce que** l'unité de commande comprend un microprocesseur (28a) pour caractériser l'état de la cellule de batterie (12a-f) sur la base du paramètre d'état détecté par l'unité de détection (26a).

4. Dispositif de sécurité (10a-f) selon l'une quelconque des revendications précédentes, **caractérisé en ce que** le dispositif de sécurité (10a-f) comprend au moins un isolateur (30a-f) pour isoler électriquement l'un de l'autre l'élément de sécurité (14a-f) et l'élément chauffant (22a-f).

5. Dispositif de sécurité (1 0a-d) selon la revendication 4, **caractérisé en ce que** l'élément de support (20a-d) joue le rôle de l'isolateur (30a-d).

6. Dispositif de sécurité (10d) selon l'une quelconque des revendications précédentes, **caractérisé en ce que** le dispositif de sécurité (10d) comprend au moins un élément de réaction (32d) qui est monté sur au moins une zone partielle (34d) de l'élément de sécurité (14d) et est prévu pour réagir avec l'élément de sécurité (14d) sous l'influence thermique de l'unité de chauffage (16d) et pour modifier ses propriétés physiques et/ou chimiques afin de favoriser un déclenchement.

7. Dispositif de sécurité (10c ; 10d) selon l'une quelconque des revendications précédentes, **caractérisé en ce que** l'élément chauffant (22c ; 22d) et l'élément de sécurité (14d ; 14d) sont conçus sous forme de couches de cuivre (66c, 68c ; 66d ; 68d) et sont disposés dans des couches adjacentes les unes aux autres (36c, 38c ; 36d ; 38d) sur l'élément de support (20c ; 22d).

8. Dispositif de sécurité (10a-f) selon l'une quelconque des revendications précédentes, **caractérisé en ce que** l'élément de sécurité (14a-f) est prévu pour être relié à une borne électrique positive (42a-f) de la cellule de batterie (12a-f) et **en ce que** l'unité de commande (18a) comprend un élément de commutation (44a) qui est conçu sous la forme d'un transistor bipolaire NPN ou d'un MOSFET à canal N.

9. Dispositif de sécurité (10a-f) selon l'une quelconque des revendications 1 à 8, **caractérisé en ce que** l'élément de sécurité (14a-f) est prévu pour être relié à une borne électrique négative (46a) de la cellule de batterie et **en ce que** l'unité de commande comprend un élément de commutation (44a) qui est conçu sous la forme d'un transistor bipolaire PNP ou d'un MOSFET à canal P.

10. Dispositif de sécurité (10a-f) selon l'une quelconque des revendications précédentes, **caractérisé en ce que** l'unité de chauffage (16a-f) est prévue pour un chauffage direct d'une zone (48a) de l'élément de sécurité (14a-f).

11. Dispositif de sécurité (10b) selon l'une quelconque des revendications précédentes, **caractérisé en ce que** l'unité de chauffage (16b) est prévue pour un chauffage direct d'au moins une zone environnante (52b) de l'élément de sécurité (14b).

12. Dispositif de sécurité (10a-f) selon l'une quelconque des revendications précédentes, **caractérisé en ce que** l'élément de sécurité (14a-f) est prévu, lors du déclenchement, pour séparer une liaison électriquement conductrice entre l'unité de chauffage (16a-f) et la cellule de batterie (12a-f).

13. Bloc-batterie (50a) comprenant au moins une cellule de batterie (12a-f) et au moins un dispositif de sécurité (10a-f) relié à la cellule de batterie (12a-f) selon l'une quelconque des revendications précédentes.

14. Procédé de fabrication d'un dispositif de sécurité (10a-d) selon l'une quelconque des revendications 1 à 12, dans lequel un élément de sécurité (14ad) et au moins un élément chauffant (22a-d) d'une unité de chauffage (16a-d) sont montés sur une carte de circuit imprimé (24a-d).
